# EUROPEAN PATENT APPLICATION

(11) **EP 4 644 060 A1**
(43) Date of publication of application: **05.11.2025**
(21) Application number: 23912260.9
(22) Date of filing: 27.12.2023
(51) Int. Cl.: B25J 13/00

(54) **ROBOT CONTROL DEVICE, ROBOT, MIXING METHOD, AND PROGRAM**

(30) Priority: 27.12.2022 JP 2022209907
(71) Applicant: Kyocera Corporation, Kyoto-shi, Kyoto 612-8501 (JP)
(72) Inventor: NISHIDA, Atsushi, Kyoto-shi, Kyoto 612-8501 (JP)
(74) Representative: TBK
(86) International application number: PCT/JP2023/046972
(87) International publication number: WO 2024/143482

(57) **Abstract**

A robot control device includes a controller. The controller controls a robot configured to perform an operation of sequentially holding each of a plurality of holding target objects in a container and a stirring process of stirring the plurality of holding target objects. The controller controls the robot to stir the plurality of holding target objects in the container from an edge of the container toward a center of the container in the stirring process.

## Description

### TECHNICAL FIELD

The present disclosure relates to a technique for stirring multiple randomly placed objects with a robot.

### BACKGROUND OF INVENTION

Patent Literature 1 describes a technique for stirring multiple randomly placed workpieces with a robot.

### CITATION LIST

### PATENT LITERATURE

Patent Literature 1: Japanese Unexamined Patent Application Publication No. 2011-115930

### SUMMARY

One or more aspects of the present disclosure are directed to a robot control device, a robot, a stirring method, and a program. In one embodiment, a robot control device includes a controller. The controller controls a robot configured to perform an operation of sequentially holding each of a plurality of holding target objects in a container and a stirring process of stirring the plurality of holding target objects. The controller controls the robot to stir the plurality of holding target objects in the container from an edge of the container toward a center of the container in the stirring process.

In one embodiment, a robot performs an operation of sequentially holding each of a plurality of holding target objects randomly placed in a container and a stirring process of stirring the plurality of holding target objects in the container. The robot stirs the plurality of holding target objects in the container from an edge of the container toward a center of the container in the stirring process.

In one embodiment, a stirring method is a method implementable with a robot that performs an operation of sequentially holding each of a plurality of holding target objects randomly placed in a container and a stirring process of stirring the plurality of holding target objects in the container. The stirring method includes stirring the plurality of holding target objects in the container from an edge of the container toward a center of the container in the stirring process.

In one embodiment, a program is a program for causing a computer to function as the controller included in the above robot control device.

### BRIEF DESCRIPTION OF THE DRAWINGS

FIG. 1 is a block diagram of an example robotic system.
FIG. 2 is a schematic diagram of a robot and its surroundings in an example.
FIG. 3 is a schematic diagram of an example end effector.
FIG. 4 is a schematic diagram of an example of a stirrer stirring multiple holding target objects in a container.
FIG. 5 is a block diagram of a robot control device, illustrating an example structure.
FIG. 6 is a flowchart of an example operation performed by the robot control device.
FIG. 7 is a schematic diagram describing an example of the movement of the stirrer in a stirring process.
FIG. 8 is a schematic diagram describing an example of the movement of the stirrer in the stirring process.
FIG. 9 is a schematic diagram illustrating example movement directions of the stirrer in the stirring process.
FIG. 10 is a schematic diagram describing an example of the movement of the stirrer in the stirring process.
FIG. 11 is a schematic diagram describing an example of the movement of the stirrer in the stirring process.
FIG. 12 is a schematic diagram describing an example of the movement of the stirrer in the stirring process.
FIG. 13 is a schematic diagram describing an example of the movement of the stirrer in the stirring process.
FIG. 14 is a schematic diagram of the stirrer, describing an example of setting the height of the stirrer.
FIG. 15 is a schematic diagram of an example of the container with its internal space divided into multiple subareas.
FIG. 16 is a schematic diagram describing an example of the movement of the stirrer in the stirring process.
FIG. 17 is a flowchart of an example operation performed by the robot control device.
FIG. 18 is a flowchart of an example operation performed by the robot control device.
FIG. 19 is a flowchart of an example operation performed by the robot control device.
FIG. 20 is a flowchart of an example operation performed by the robot control device.

### DESCRIPTION OF EMBODIMENTS

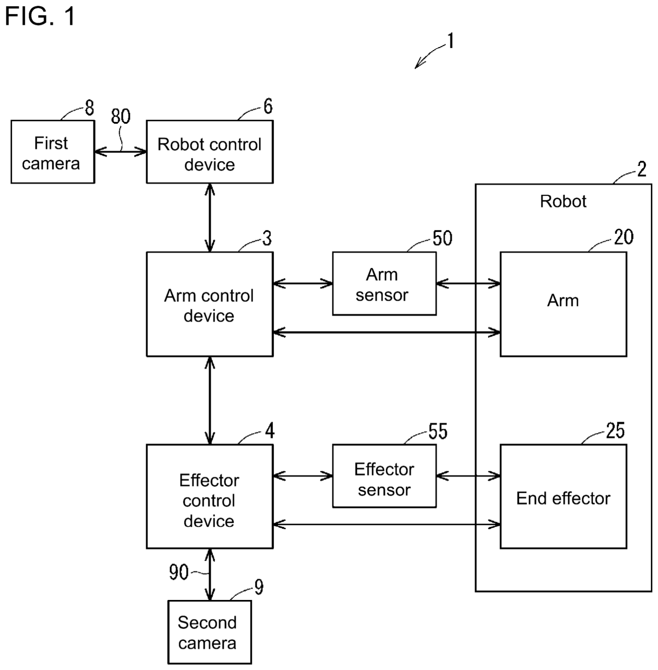

FIG. 1 is a block diagram of a robotic system 1, illustrating an example structure. As illustrated in FIG. 1, the robotic system 1 includes, for example, a robot 2 and a robot control device 6 that controls the robot 2. The robot control device 6 manages, for example, an overall operation of the robotic system 1. The robot 2 includes, for example, an arm 20 and an end effector 25. The robotic system 1 includes an arm control device 3 that controls the arm 20 and an effector control device 4 that controls the end effector 25. The robot control device 6 can communicate with the arm control device 3 and can control the arm control device 3. The arm control device 3 can communicate with the effector control device 4. The robot control device 6 can communicate with the effector control device 4 through the arm control device 3, and can control the effector control device 4 through the arm control device 3. The robot control device 6 can control the arm 20 through the arm control device 3. The robot control device 6 can control the end effector 25 through the arm control device 3 and the effector control device 4. The robot control device 6 may also be referred to as a host control device 6 that controls the robot 2.

The robotic system 1 includes, for example, a first camera 8, a second camera 9, an arm sensor 50 that detects the state of the arm 20, and an effector sensor 55 that detects the state of the end effector 25. The robot control device 6 controls the robot 2 based on, for example, camera images obtained by the first camera 8 and the second camera 9 and detection results from the arm sensor 50 and the effector sensor 55.

### Robot

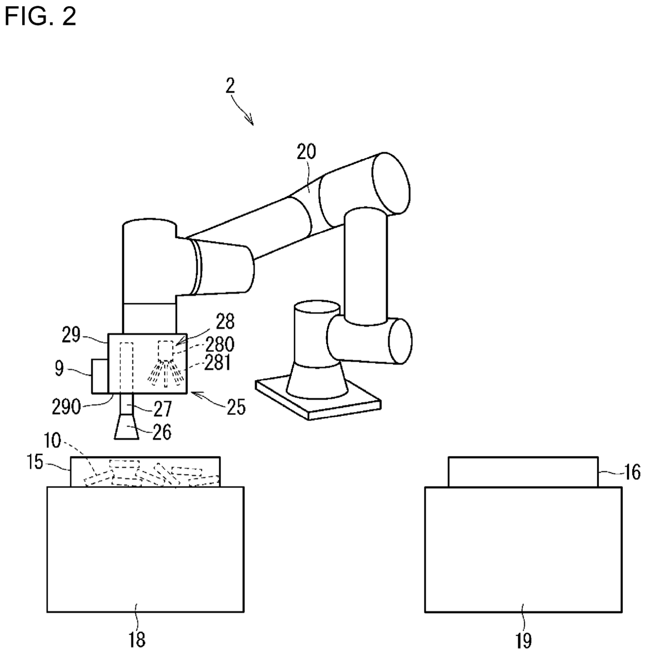

FIG. 2 is a schematic diagram of the robot 2 and its surroundings in an example. The robot 2 can, for example, hold and transfer a holding target object 10 from a source area to a destination area. The holding target object 10 is also referred to as, for example, a workpiece. The robot 2 holds the holding target object 10 in the source area with the end effector 25. The robot 2 then transfers the holding target object 10 held with the end effector 25 from the source area to the destination area. For example, the robot 2 transfers the holding target object 10 held with the end effector 25 from the source area to the destination area by changing the posture of the robot 2, or more specifically, the posture of the arm 20. The position of the arm 20 is determined based on the posture of the arm 20. The position of the end effector 25 is determined based on the posture of the arm 20. The end effector 25 releases the holding target object 10 transferred to the destination area to place the holding target object 10 in the destination area.

The source area and the destination area are, for example, containers. Multiple holding target objects 10 are in a container 15 as the source area (also referred to as a source container 15). For example, the multiple holding target objects 10 are randomly placed in the source container 15. The robot 2 performs, for example, an operation of sequentially holding the holding target objects 10 in the source container 15 one by one and transferring the holding target objects 10 to a container 16 as the destination area (also referred to as a destination container 16). For example, the source container 15 is placed on a worktable 18, and the destination container 16 is placed on a worktable 19. The robot 2 may transfer the holding target objects 10 on the worktable 18 to the worktable 19. The robot control device 6 can control the movement of the robot 2 to cause the robot 2 to perform the operation. The holding target objects 10 may be hereafter simply referred to as target objects 10.

The robot 2 may perform operations other than the above example operation. The source area and the destination area are not limited to those in the above example. For example, at least one of the source area or the destination area may be a shelf on which the target objects 10 are placed, a stand on which the target objects 10 are directly placed, or a conveyor to transport the target objects 10.

The arm 20 includes, for example, multiple joints and multiple links (in other words, arm portions). Each of the joints includes a motor to rotate the joint. The arm 20 includes, for example, six joints. The arm 20 has, for example, six degrees of freedom. The robot 2 can change the posture of the arm 20 by changing the rotation angle of at least one of the six joints. The arm control device 3 can control the rotation angle of each of the joints in response to an instruction from the robot control device 6. In other words, the robot control device 6 can control the rotation angle of each of the joints through the arm control device 3. The robot control device 6 can control the posture of the arm 20 through the arm control device 3. The number of multiple joints included in the arm 20 may be other than six.

The effector control device 4 can control the end effector 25 in response to an instruction from the robot control device 6. The robot control device 6 can provide various instructions to the effector control device 4 through, for example, the arm control device 3. The robot control device 6 can control the end effector 25 through the arm control device 3 and the effector control device 4.

As illustrated in FIG. 2, the end effector 25 includes, for example, a holder 26 that holds each of the target objects 10 in the container 15, a stirrer 28 that stirs the multiple target objects 10 in the container 15, and a housing 29 that can accommodate the holder 26 and the stirrer 28. The robot 2 performs a stirring process of stirring the multiple target objects 10 in the container 15 with the stirrer 28 during operation. The stirring process allows the robot 2 to hold each of the target objects 10 in the container 15 easily.

The holder 26 and the stirrer 28 can individually come out of or into the housing 29. The holder 26 may include, for example, multiple fingers that grip each of the target objects 10 or at least one suction portion that sucks and holds the target object 10. The suction portion is also referred to as, for example, a suction pad. FIG. 2 illustrates the holder 26 including, for example, at least one suction portion. The end effector 25 includes a first drive that drives the holder 26. The effector control device 4 can control the holding operation of the holder 26 by controlling the first drive.

The end effector 25 includes an attachment 27 to which the holder 26 is attached. The attachment 27 is, for example, elongated and fixed to the inside of the housing 29. The holder 26 is attached to one end of the attachment 27 in a longitudinal direction. The attachment 27 may also be referred to as a fixture 27 fixed to the housing 29. The fixture 27 may be, for example, a shaft.

The attachment 27 is, for example, extendable. The attachment 27 extends or retracts to allow the holder 26 to come out of or into the housing 29. FIG. 2 illustrates an example of the attachment 27 extending to allow the holder 26 to come out of the housing 29. The end effector 25 includes a second drive that causes the attachment 27 to extend or retract. The effector control device 4 can cause the attachment 27 to extend or retract by controlling the second drive. Hereafter, the state of the holder 26 being outside the housing 29 as illustrated in FIG. 2 is referred to as an exposed state, and the state of the holder 26 being inside the housing 29 is referred to as an accommodated state. The effector control device 4 allows the holder 26 to enter the exposed state or the accommodated state by controlling the second drive.

The stirrer 28 includes, for example, multiple elongated members 281 and an attachment 280 to which the multiple elongated members 281 are attached. The multiple elongated members 281 extend from the attachment 280 and are softer than the attachment 280. The attachment 280 is, for example, elongated and may be a shaft. The multiple elongated members 281 extend from, for example, one end of the attachment 280 in the longitudinal direction to flare conically. The multiple elongated members 281 include their distal ends substantially on the same plane. The stirrer 28 may be, for example, a stirring rod.

The elongated members 281 are, for example, tubular. The elongated members 281 are made of, for example, an elastomer. The elongated members 281 may be made of polyurethane or a silicone resin. The attachment 280 is made of, for example, metal or a relatively hard resin such as acrylonitrile butadiene styrene (ABS). Note that the materials for the elongated members 281 and the attachment 280 are not limited to these examples.

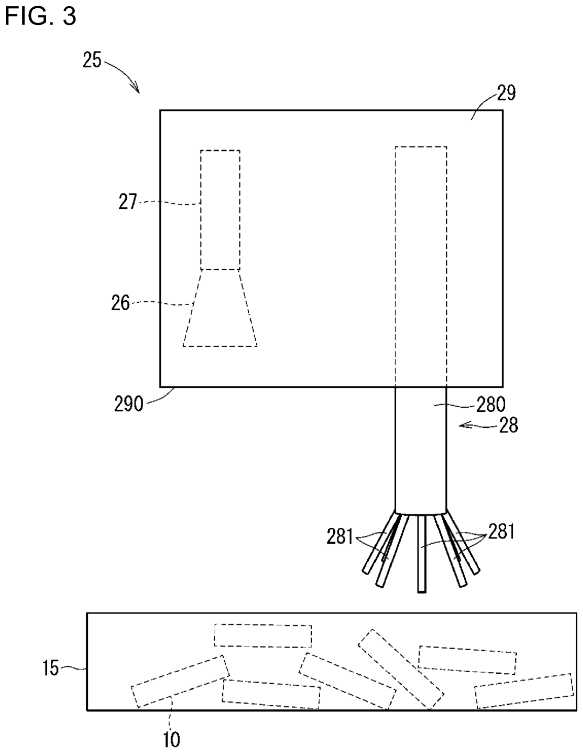

The attachment 280 is fixed to, for example, the inside of the housing 29. The attachment 280 may also be referred to as a fixture 280 fixed to the housing 29. The attachment 280 is, for example, extendable. The attachment 280 extends or retracts to allow the stirrer 28 to come out of or into the housing 29. FIG. 3 is a schematic diagram of an example of the attachment 280 extending to allow the stirrer 28 to come out of the housing 29. FIG. 2 illustrates an example of the attachment 280 retracting to allow the stirrer 28 to come into the housing 29. In FIG. 3, the second camera 9 is not illustrated.

The attachment 280 can extend or retract in, for example, the same direction as the attachment 27. The multiple elongated members 281 can thus move in the same direction as the holder 26. The holder 26 and the stirrer 28 can come out of or into the housing 29 through an opening 290 (refer to FIGs. 2 and 3) of the housing 29.

As illustrated in FIG. 3, when the stirrer 28 is out of the housing 29, each of the multiple elongated members 281 is fully out of the housing 29, and the attachment 280 is partially out of the housing 29. The end effector 25 includes a third drive that causes the attachment 280 to extend or retract. The effector control device 4 can cause the attachment 280 to extend or retract by controlling the third drive. Hereafter, the state of the stirrer 28 being partially out of the housing 29 as illustrated in FIG. 3 is referred to as an exposed state, and the state of the stirrer 28 being fully inside the housing 29 is referred to as an accommodated state. The effector control device 4 allows the stirrer 28 to enter the exposed state or the accommodated state by controlling the third drive.

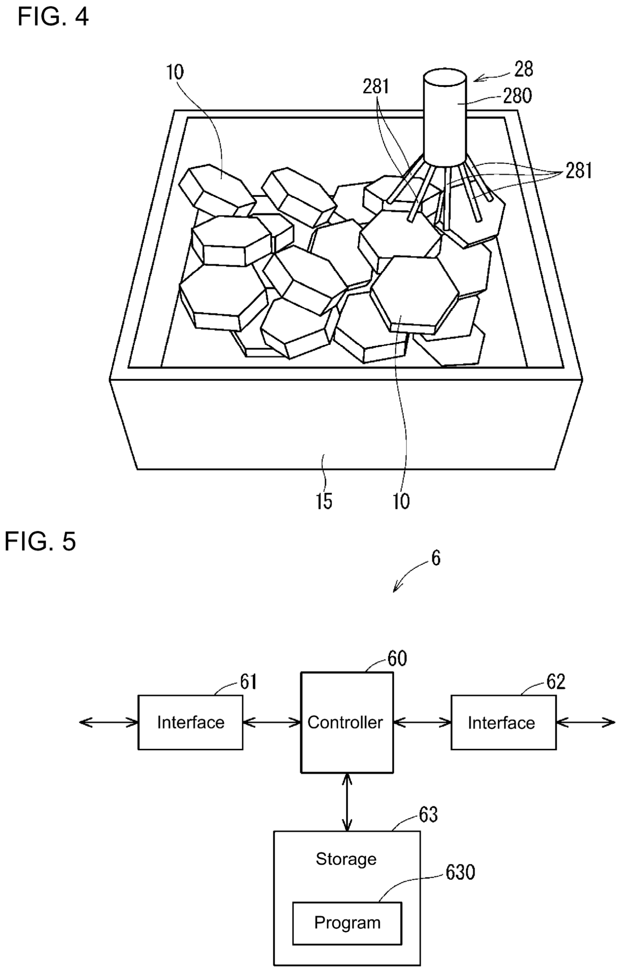

When the robot 2 is to hold each of the target objects 10 in the container 15, the holder 26 is set to the exposed state, and the stirrer 28 is set to the accommodated state as illustrated in FIG. 2. When the robot 2 is to perform the stirring process, the stirrer 28 is set to the exposed state, and the holder 26 is set to the accommodated state as illustrated in FIG. 3. In the stirring process, the robot 2 stirs the multiple target objects 10 in the container 15 in a manner to cause the multiple elongated members 281 to hit the multiple target objects 10 in the container 15. For example, the robot 2 sweeps the multiple target objects 10 in the container 15 with the multiple elongated members 281 to stir the multiple target objects 10 in the container 15. FIG. 4 is a schematic diagram of an example of the stirrer 28 stirring the multiple target objects 10 in the container 15.

For example, when the stirring process is not performed, the holder 26 is set to the exposed state, and the stirrer 28 is set to the accommodated state. For example, simply when the stirring process is performed, the holder 26 is set to the accommodated state, and the stirrer 28 is set to the exposed state.

Note that the holder 26 and the stirrer 28 may be both normally set to the accommodated state. When the end effector 25 is to hold each of the target objects 10, the holder 26 may be set to the exposed state, and the stirrer 28 may be set to the accommodated state. When the stirring process is performed, the holder 26 may be set to the accommodated state, and the stirrer 28 may be set to the exposed state.

The robot control device 6 can control the position of the stirrer 28 in the end effector 25 by controlling the robot 2. More specifically, the robot control device 6 can control the position of the stirrer 28 by controlling the posture of the arm 20 through the arm control device 3. The robot control device 6 can cause the robot 2 to perform the stirring process by controlling the posture of the arm 20. In the stirring process, the robot control device 6 controls the posture of the arm 20 to cause the stirrer 28 to move in a predetermined manner. Specific examples of the movement of the stirrer 28 in the stirring process will be described in detail later.

Note that the attachment 27 may not be extendable. In this case, the end effector 25 may include a first mover that moves the attachment 27 to allow the holder 26 to come out of or into the housing 29.

The attachment 280 may not be extendable. In this case, the end effector 25 may include a second mover that moves the attachment 280 to allow the stirrer 28 to come out of or into the housing 29.

### First Camera and Second Camera

The first camera 8 is, for example, a three-dimensional camera. The first camera 8 has an imaging range (also referred to as a first imaging range) including, for example, a work area of the robot 2. The first camera 8 captures an image of the first imaging range and generates a two-dimensional color image and a range image. Pixel values in the color image each include, for example, a red component (R component), a green component (G component), and a blue component (B component). The color image is also referred to as an RGB image. The color image includes the work area. The range image is an image that two-dimensionally shows the distances to measurement points included in the first imaging range. Pixel values in the range image represent the distances to the measurement points corresponding to the respective pixel values. The range image is also referred to as a depth image. The first camera 8 outputs, to the robot control device 6, first image data 80 (refer to FIG. 1) indicating first camera images including the color image and the range image. The robot control device 6 controls the robot 2 based on the first camera images indicated by the first image data 80.

The second camera 9 is, for example, a three-dimensional camera. As illustrated in FIG. 2, the second camera 9 is fixed to, for example, an outer surface of the housing 29 of the end effector 25. The second camera 9 thus has an imaging range (also referred to as a second imaging range) that changes based on the posture of the end effector 25. The posture of the end effector 25 changes based on the posture of the arm 20. The second imaging range thus changes based on the posture of the arm 20.

When the end effector 25 holds each of the target objects 10 in the container 15, the second camera 9 captures an image of the source container 15 from above the source container 15. In this case, the multiple target objects 10 in the container 15 are within the second imaging range. When the end effector 25 releases the target object 10 and places the target object 10 in the destination container 16, the second camera 9 captures an image of the destination container 16 from above the destination container 16.

The second camera 9 captures an image of the second imaging range and generates, for example, a two-dimensional color image and a range image in the same manner as or in a similar manner to the first camera 8. When the end effector 25 holds each of the target objects 10 in the container 15, the color image includes the container 15 and the multiple target objects 10 in the container 15. The second camera 9 outputs, to the effector control device 4, second image data 90 (refer to FIG. 1) indicating second camera images including the color image and the range image. The effector control device 4 transmits the second image data 90 to the robot control device 6 through the arm control device 3. The robot control device 6 controls the robot 2 based on the second images indicated by the second image data 90.

### Arm Sensor and Effector Sensor

The arm sensor 50 can detect, for example, the state of each of the multiple joints in the arm 20. For example, the arm sensor 50 includes, for each of the multiple joints, a current sensor that detects a current flowing through the joint, a torque sensor that detects torque applied to the joint, and an encoder that detects the rotation angle of the joint. The encoder is also referred to as a rotary encoder. The arm sensor 50 outputs, to the arm control device 3, arm state information indicating detection results obtained. The arm state information indicates a current flowing through each of the joints, torque applied to each of the joints, and the rotation angle of each of the joints. The arm control device 3 transmits the arm state information to the robot control device 6. The robot control device 6 controls the robot 2 based on the arm state information.

The effector sensor 55 includes, for example, a contact sensor and a force sensor. The contact sensor can detect, for example, a holding force (e.g., a grip force or a suction force) of the holder 26 on each of the target objects 10. The contact sensor is also referred to as, for example, a pressure sensor. The contact sensor may be, for example, an electrical resistance sensor, a capacitance sensor, a piezoelectric sensor, or an optical sensor.

The force sensor can detect, for example, a force applied to the end effector 25. The force sensor may be, for example, a six-axis force sensor. The force sensor may be, for example, an electrical resistance sensor, a capacitance sensor, a piezoelectric sensor, or an optical sensor.

The effector sensor 55 outputs, to the effector control device 4, end effector state information indicating detection results obtained. The end effector state information indicates the holding force of the holder 26 on each of the target objects 10 and a force applied to the end effector 25. The effector control device 4 transmits the end effector state information to the robot control device 6 through the arm control device 3. The robot control device 6 controls the robot 2 based on the end effector state information.

### Example Structure of Robot Control Device

FIG. 5 is a block diagram of the robot control device 6, illustrating an example structure. The robot control device 6 is, for example, a computer. The robot control device 6 may be a control device or a control circuit. As illustrated in FIG. 5, the robot control device 6 includes, for example, a controller 60, an interface 61, an interface 62, and a storage 63.

The interface 61 can communicate with the first camera 8. The interface 61 may be, for example, an interface circuit, a communication unit, or a communication circuit. The interface 61 may perform wired or wireless communication.

The interface 62 can communicate with the arm control device 3. The controller 60 can control the arm control device 3 through the interface 62. The interface 62 complies with, for example, EtherCAT (registered trademark) to perform wired communication with the arm control device 3. The arm control device 3 complies with, for example, EtherCAT to perform wired communication with the effector control device 4. The interface 62 receives the arm state information output from the arm sensor 50 and the effector state information output from the effector sensor 55. Note that the interface 62 and the arm control device 3 may comply with a communication protocol other than EtherCAT. The interface 62 and the arm control device 3 may perform wireless communication.

The controller 60 can control other components of the robot control device 6 to centrally manage an operation of the robot control device 6. The controller 60 may be, for example, a control circuit. The controller 60 includes at least one processor to provide control and processing capabilities for implementing various functions, as described in more detail below.

In various embodiments, at least one processor may be a single integrated circuit (IC), or multiple ICs, multiple discrete circuits, or both these circuits connected to one another for mutual communication. The processor may be implemented using any of various known techniques.

In one embodiment, for example, the processor includes one or more circuits or units configured to execute instructions stored in an associated memory to perform one or more data computation procedures or processes. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations. The processor may perform the functions described below.

The controller 60 may include, for example, a central processing unit (CPU) as the processor. The controller 60 can control the arm 20 through the interface 62 and the arm control device 3. The controller 60 can identify the current posture of the arm 20 based on the arm state information received by the interface 62. The controller 60 can control the end effector 25 through the interface 62, the arm control device 3, and the effector control device 4. The controller 60 can determine, for example, whether the end effector 25 is appropriately holding each of the target objects 10 or whether the end effector 25 has dropped the target object 10 based on the effector state information received by the interface 62. The controller 60 can control the position of the stirrer 28 by controlling the posture of the arm 20 through the interface 62 and the arm control device 3. The controller 60 can cause the robot 2 to perform the stirring process by controlling the posture of the arm 20.

The storage 63 may include, for example, a non-transitory recording medium readable by the CPU in the controller 60, such as a read-only memory (ROM) and a random-access memory (RAM). The storage 63 stores, for example, a program 630 for controlling the robot control device 6. Various functions of the controller 60 are implemented by, for example, the CPU in the controller 60 executing the program 630 in the storage 63.

The storage 63 stores, for example, robot information and target object information used to control the robot 2, in addition to the program 630. The robot information is information about the robot 2. The robot information includes, for example, information indicating the shape of the robot 2. The target object information is information about the target objects 10. The object information includes, for example, information indicating the shape of the target objects 10.

Note that the controller 60 is not limited to the above example. For example, the controller 60 may include multiple CPUs. The controller 60 may also include at least one digital signal processor (DSP). The functions of the controller 60 may be implemented entirely or partially by a hardware circuit, without using software to implement the functions. The storage 63 may also include a non-transitory computer-readable recording medium other than the ROM and the RAM. The storage 63 may include, for example, a small hard disk drive and a solid-state drive (SSD).

The robot control device 6 may include an input unit that can receive various inputs from a user. The input unit may include, for example, a mouse and a keyboard. The input unit may include a touch sensor to receive touch operations performed by the user. When the robot control device 6 includes a display such as a liquid crystal display, the display and the touch sensor may together serve as a touchscreen display that performs display and detects touches. The input unit may include a microphone to receive a voice input from the user. The controller 60 can obtain the details of a user input received by the input unit based on an output signal from the input unit. Note that the robot control device 6 may include an interface to communicate with an external device other than the first camera 8 and the arm control device 3, and may receive an input from the user through the interface.

The robot control device 6 may include multiple computers. The robot control device 6 may be a cloud server. In this case, the robot control device 6 may communicate with other components such as the arm control device 3 through, for example, a network including the Internet.

The arm control device 3 may include, for example, the same structure as or a similar structure to the robot control device 6. For example, the arm control device 3 may include a controller including a processor such as a CPU, a storage storing, for example, a program executable by the processor, an interface to communicate with the robot control device 6, and an interface to communicate with the effector control device 4. The effector control device 4 may include, for example, the same structure as or similar structure to the robot control device 6. For example, the effector control device 4 may include a controller including a processor such as a CPU, a storage storing, for example, a program executable by the processor, and an interface to communicate with the arm control device 3.

### Stirring Process

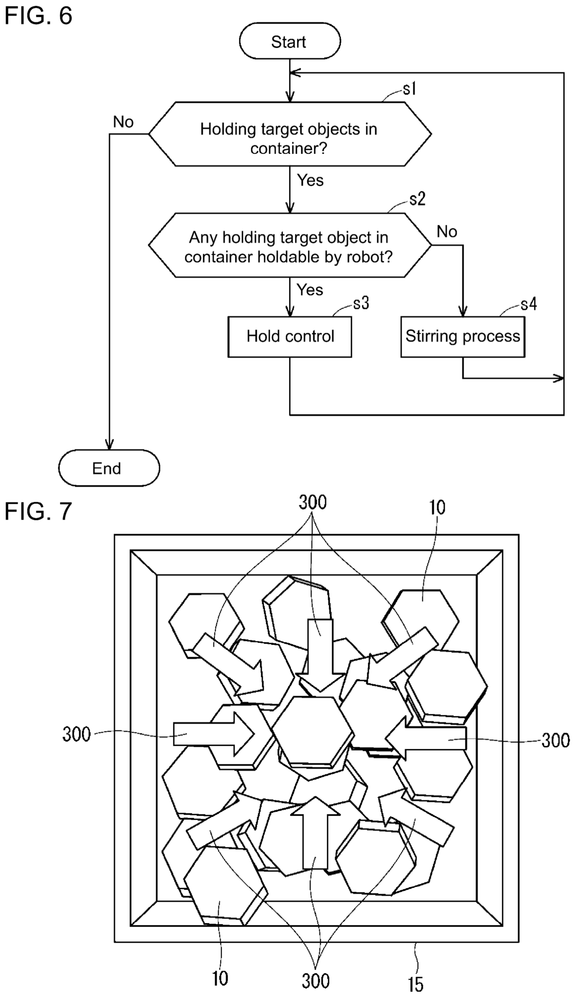

FIG. 6 is a flowchart of an example operation included in the stirring process performed by the controller 60. When the operation performed by the robot 2 starts, the holder 26 in the exposed state is located above the container 15. Once the operation performed by the robot 2 starts, the controller 60 determines, in step s1, whether the holding target objects 10 are in the container 15 based on the second camera images obtained by the second camera 9. When the determination result is affirmative in step s1, the controller 60 determines, in step s2, whether any of the target objects 10 in the container 15 is holdable by the robot 2 (more specifically, the holder 26 in the end effector 25). When the determination result is negative in step s1, the operation performed by the robot 2 ends.

When the robot 2 changes the posture of the arm 20 and attempts to hold a specific one of the target objects 10 in the container 15 with the holder 26 in the end effector 25, the robot 2 may interfere with the container 15, disabling the holder 26 from holding the specific target object 10. The posture of the arm 20 is limited by, for example, the reach of the arm 20 and the rotation ranges of the joints in the arm 20. Thus, when the robot 2 changes the posture of the arm 20 and attempts to hold a specific one of the target objects 10 in the container 15 with the holder 26, the arm 20 may not have a posture in which the holder 26 can hold the specific target object 10. When none of the holding target objects 10 in the container 15 is holdable with the holder 26 due to, for example, the container 15 and the robot 2 interfering with each other, the controller 60 performs step s4. The controller 60 can obtain, for example, information about the container 15 (e.g., the position and the shape of the container 15) based on the first camera images and determine, based on the obtained information about the container 15, whether the container 15 and the robot 2 interfere with each other when the robot 2 attempts to hold a specific one of the target objects 10 in the container 15. The information about the container 15 may be prestored in the storage 63.

When the determination result indicates that one of the target objects 10 in the container 15 is holdable with the holder 26 in step s2, step s3 is performed. In step s3, the controller 60 performs hold control to control the arm 20 and the end effector 25 to cause the robot 2 to attempt to hold one of the target objects 10 in the container 15.

When the robot 2 attempts to hold the target object 10 in the container 15 and is successful in holding the target object 10, the controller 60 controls the posture of the arm 20 to cause the target object 10 held with the holder 26 to be transferred from the source container 15 to the destination container 16. The controller 60 can determine whether the robot 2 is successful in holding the target object 10 based on the end effector state information. When controlling the posture of the arm 20 to cause the target object 10 to be transferred from the source container 15 to the destination container 16, the controller 60 identifies any obstacle in the work area based on the first camera images. The controller 60 then changes the posture of the arm 20 to avoid interference between the identified obstacle and the robot 2 and between the identified obstacle and the target object 10. When the target object 10 is transferred to the destination container 16, the controller 60 controls the end effector 25 to release the target object 10. This places the target object 10 in the destination container 16. The controller 60 then controls the posture of the arm 20 to cause the holder 26 to be located above the container 15 again as illustrated in FIG. 2. Step s1 is then performed again. After step s1 is performed, the controller 60 operates in the same manner as or in a similar manner to the above.

When the robot 2 attempts to hold the target object 10 in the container 15 under the hold control performed in step s3 and is unsuccessful in holding the target object 10, step s1 is performed again. After step s1 is performed, the controller 60 operates in the same manner as or in a similar manner to the above.

In step s4, the controller 60 causes the robot 2 to perform the stirring process. In step s4, the controller 60 first controls the end effector 25 to cause the holder 26 to enter the accommodated state and the stirrer 28 to enter the exposed state. The controller 60 then controls the posture of the arm 20 to cause the stirrer 28 in the exposed state to stir the multiple target objects 10 in the container 15. Upon completion of the stirring process, the controller 60 controls the end effector 25 to cause the holder 26 to enter the exposed state and the stirrer 28 to enter the accommodated state.

After step s4, step s1 is performed again. The controller 60 thereafter operates in the same manner as or in a similar manner to the above. In step s2 after step s4, the multiple target objects 10 in the container 15 are at positions changed in the stirring process. The determination result may thus indicate that one of the target objects 10 in the container 15 is holdable with the holder 26. This allows the robot 2 to hold each of the target objects 10 in the container 15 easily. Note that, in the stirring process, the multiple target objects 10 overlapping one another in the container may be stirred to overlap one another in a different manner.

### Stirring Method

Multiple examples of a stirring method for stirring the multiple target objects 10 in the container 15 with the stirrer 28 will now be described.

### First Example

FIG. 7 is a schematic diagram describing an example stirring method. In this example, the controller 60 controls the robot 2 to cause the stirrer 28 to move from an edge toward the center of the container 15 in the stirring process. In other words, the controller 60 controls the robot 2 to stir the multiple target objects 10 in the container 15 from an edge toward the center of the container 15 in the stirring process. The controller 60 can identify the edge and the center of the container 15 based on, for example, the second camera images obtained by the second camera 9. The controller 60 controls the posture of the arm 20 based on the second camera images to cause the stirrer 28 to move from the edge toward the center of the container 15. The controller 60 may identify the edge and the center of the container 15 based on the information about the container 15 prestored in the storage 63.

The controller 60 may control the robot 2 to cause the stirrer 28 to move in, for example, multiple directions 300 from the edge toward the center of the container 15 in the stirring process. In the example in FIG. 7, the multiple directions 300 are defined to, for example, surround the center of the container 15 substantially circularly when the container 15 is viewed from above (in other words, an opening of the container 15). The controller 60 controls the posture of the arm 20 to cause the stirrer 28 to move in one of the directions 300, and then controls the posture of the arm 20 to cause the stirrer 28 to move in another one of the directions 300. The controller 60 repeats this process and, for each of the multiple directions 300, controls the posture of the arm 20 to cause the stirrer 28 to move in the direction 300.

The controller 60 may select the multiple directions 300 one by one in a clockwise direction or in a counterclockwise direction when the container 15 is viewed from above as in FIG. 7. Every time the controller 60 selects one of the directions 300, the controller 60 may control the posture of the arm 20 to cause the stirrer 28 to move in the selected direction 300. Note that the controller 60 may select the multiple directions 300 in a different order. For example, the controller 600 may select one of the directions 300, and then select one of the directions 300 opposite to the direction 300 that has been selected.

The number of multiple directions 300 may be defined based on, for example, the size of the container 15 when the container 15 is viewed from above. In other words, the number of multiple directions 300 may be defined based on the size of the opening of the container 15. The multiple directions 300 may be defined based on, for example, the shape of the container 15 when the container 15 is viewed from above. In other words, the multiple directions 300 may be defined based on the shape of the opening of the container 15. The number of multiple directions 300 may be defined based on, for example, the size of the stirrer 28. More specifically, the number of multiple directions 300 may be defined based on, for example, an area size of a lower surface of the stirrer 28 facing the container 15 or the dimension of the outer edge of the lower surface. The number of multiple directions 300 may be defined based on, for example, the number of remaining multiple target objects 10. Note that the number of multiple directions 300 may be redefined every time the stirring process is performed.

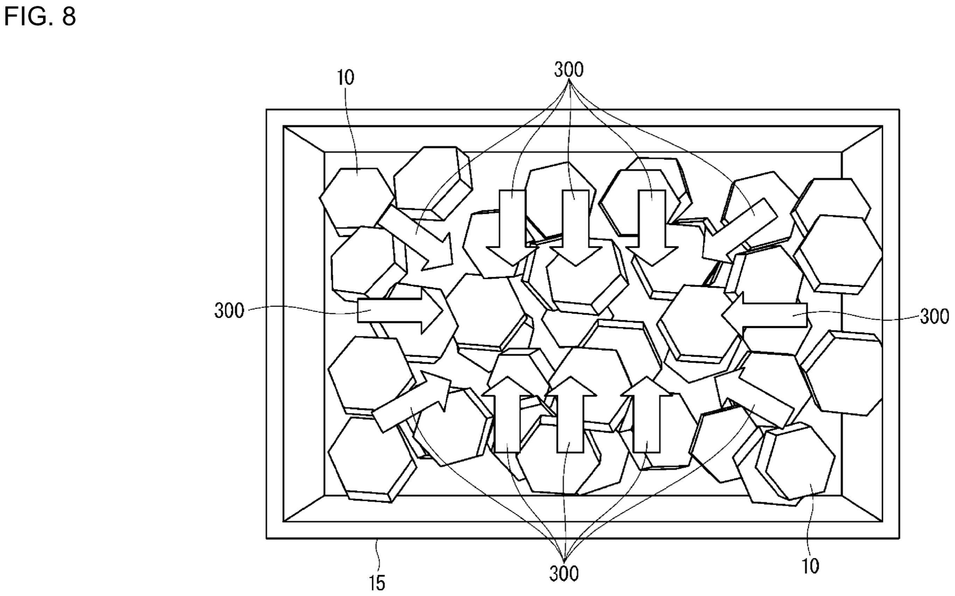

As in the example in FIG. 7, for the container 15 that is square as viewed from above, the multiple directions 300 may be defined substantially circularly when the container 15 is viewed from above. For the container 15 that is square and larger than in the example in FIG. 7 as viewed from above, more than eight directions 300 (e.g., sixteen directions 300) may be defined substantially circularly. As in the example in FIG. 8, for the container 15 that is rectangular as viewed from above, the multiple directions 300 may be defined in a substantially rectangular or substantially elliptical shape that is elongated in a longitudinal direction of the container 15 when the container 15 is viewed from above.

The controller 60 may control the robot 2 to cause the stirrer 28 to move in one of the directions 300 alone in the stirring process.

In this example, as described above, the stirrer 28 moves from the edge toward the center of the container 15 in the stirring process. In other words, the multiple target objects 10 in the container 15 are stirred from the edge toward the center of the container 15 in the stirring process. When the end effector 25 attempts to hold one of the target objects 10 near the edge of the container 15, the robot 2 may interfere with the container 15, disabling the end effector 25 from holding the target object 10 near the edge of the container 15. In contrast, the robot 2 can hold one of the target objects 10 in the center of the container 15 easily. The stirrer 28 moving from the edge toward the center of the container 15 in the stirring process as in this example reduces the likelihood that the robot 2 cannot hold each of the target objects 10. In other words, the stirring process performed as in this example increases successful holding of the target objects 10 by the robot 2. This reduces the number of times the operation is interrupted and shortens the operation time.

When the stirrer 28 moves along the edge of the container 15, the target objects 10 may be caught between a peripheral wall of the container 15 and the attachment 280 in the stirrer 28. For the robotic system 1 configured to forcibly stop the robot 2 in response to large torque being applied to the joints in the arm 20, the robot 2 may be forcibly stopped when any of the target objects 10 is caught between the peripheral wall of the container 15 and the attachment 280 that is hard and large torque is applied to the joints in the arm 20. In this example, the stirrer 28 moves from the edge toward the center of the container 15 in the stirring process, thus allowing any of the target objects 10 to be less likely to be caught between the peripheral wall of the container 15 and the hard attachment 280. This reduces the likelihood that the robot 2 is forcibly stopped.

When the stirrer 28 moves in the multiple directions 300 from the edge toward the center of the container 15 in the stirring process as in the examples in FIGs. 7 and 8, or in other words, when the stirrer 28 stirs in the multiple directions 300 from the edge toward the center of the container 15, the stirrer 28 can sufficiently stir the multiple target objects 10 in the container 15. This allows the robot 2 to hold each of the target objects 10 in the container 15 easily.

### Second Example

When the stirrer 28 moves in the multiple directions 300 from the edge toward the center of the container 15 in the stirring process as in the first example described above, the multiple target objects 10 may be piled in the center of the container 15. When the multiple target objects 10 are piled too high in the center of the container 15, the robot 2 may hold each of the target objects 10 in the container 15 less easily.

In this example, the controller 60 controls the robot 2 to cause, in the stirring process, the stirrer 28 to circulate around the center of the container 15 after moving in the multiple directions 300. The stirrer 28 can thus stir the multiple target objects 10 piled in the center of the container 15 by the stirrer 28 moving in the multiple directions 300 from the edge toward the center of the container 15 to unpile the multiple target objects 10. In other words, the stirrer 28 can stir the multiple target objects 10 gathered in the center of the container 15 during the stirring operation in the multiple directions 300 from the edge toward the center of the container 15 to unpile the multiple target objects 10. This increases successful holding of the target objects 10 in the container 15 by the robot 2. The operation of the stirrer 28 circulating around the center of the container 15 may be hereafter referred to as a circular stirring operation. The operation of the stirrer 28 moving in the multiple directions 300 from the edge toward the center of the container 15 may be referred to as a stirring operation toward the center.

The circular stirring operation may be performed in every stirring process or every time the stirring process is performed multiple times. In other words, the circular stirring operation may be performed every time step s4 described above is performed or every time step s4 is performed multiple times. The multiple target objects 10 may be piled in the center of the container 15 when the stirring operation toward the center is performed. Thus, when the circular stirring operation is performed, the stirrer 28 may be set higher from the container 15 than when the stirring operation toward the center is performed.

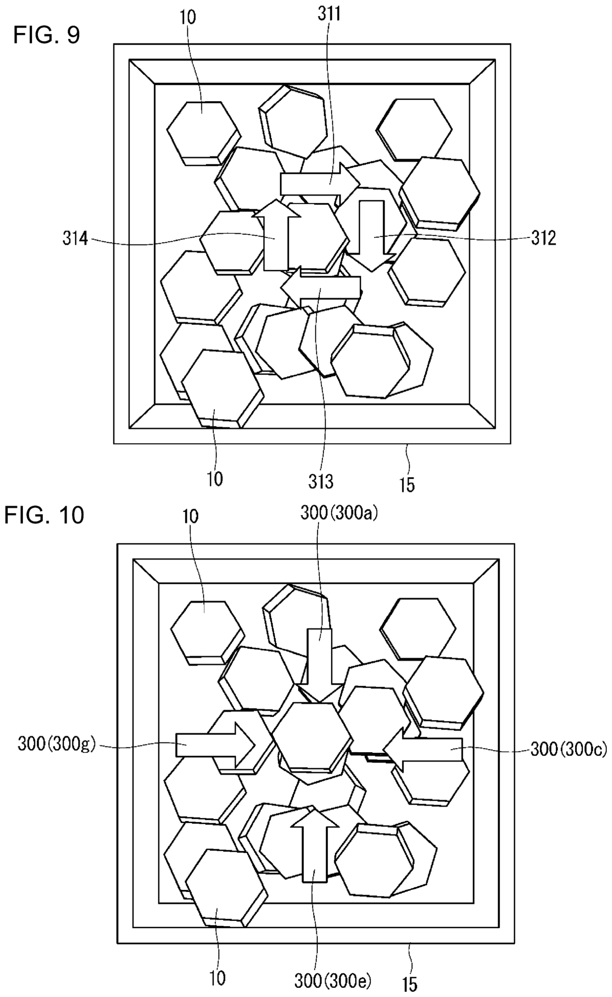

FIG. 9 is a schematic diagram describing an example of the stirrer 28 circulating around the center of the container 15. In this stirring process, the stirrer 28 moves, for example, in a first direction 311, in a second direction 312, in a third direction 313, and finally in a fourth direction 314. The stirrer 28 thus circulates around the center of the container 15 once.

The first direction 311, the second direction 312, the third direction 313, and the fourth direction 314 are defined to surround the center of the container 15 when the container 15 is viewed from above. The first direction 311, the second direction 312, the third direction 313, and the fourth direction 314 are defined to be, for example, parallel to the respective sides of a quadrangle defined by the outline of the container 15 as viewed from above. In the example in FIG. 9, the stirrer 28 moves to draw a quadrangle surrounding the center of the container 15 when the container 15 is viewed from above.

The stirrer 28 circulating around the center of the container 15 may move in a manner other than in the example in FIG. 9. For example, of the first direction 311, the second direction 312, the third direction 313, and the fourth direction 314, the stirrer 28 may start moving in the second direction 312, the third direction 313, or the fourth direction 314. For example, the stirrer 28 may circulate around the center of the container 15 twice or more. The stirrer 28 may move to draw a circle surrounding the center of the container 15 when the container 15 is viewed from above.

### Third Example

The robot 2 cannot hold and transfer each of the target objects 10 in the container 15 during the stirring process. The robot 2 may thus have lower work efficiency when the multiple target objects 10 in the container 15 are stirred for a long time. When the number of multiple directions 300 in which the stirrer 28 moves in a single stirring process is simply reduced, the stirrer 28 may not sufficiently stir the multiple target objects 10 in the container 15.

In this example, in the stirring process that is performed multiple times, a stirring pattern including multiple directions 300 in which the stirrer 28 moves in one stirring process differs from a stirring pattern including multiple directions 300 in which the stirrer 28 moves in another stirring process. This allows the multiple target objects 10 in the container 15 to be stirred efficiently.

The stirring pattern including the multiple directions 300 in which the stirrer 28 moves in the stirring process may be referred to as a stirring pattern toward the center. Of the eight directions 300 illustrated in FIG. 8, the direction 300 from the 12 o'clock position is referred to as a direction 300a. The direction 300 from the three o'clock position is referred to as a direction 300c. The direction 300 from the six o'clock position is referred to as a direction 300e. The direction 300 from the nine o'clock position is referred to as a direction 300g. The direction 300 between the directions 300a and 300c is referred to as a direction 300b. The direction 300 between the directions 300c and 300e is referred to as a direction 300d. The direction 300 between the directions 300e and 300g is referred to as a direction 300f. The direction 300 between the directions 300g and 300a is referred to as a direction 300h.

In this example, multiple types of stirring processes with different stirring patterns toward the center are performed. Two types of stirring processes with different stirring patterns toward the center refer to either of the two types of stirring processes including multiple directions 300 different from all the multiple directions 300 included in the other type of stirring process. Thus, two types of stirring processes with different stirring patterns toward the center include two types of stirring processes including different numbers of multiple directions 300. Two types of stirring processes with different stirring patterns toward the center include two types of stirring processes either of which includes, as some of its multiple directions 300, all the multiple directions 300 included in the other type of stirring process. Two types of stirring processes with different stirring patterns toward the center include two types of stirring processes including the same number of multiple directions 300 that are defined differently from each other between the two types of stirring processes.

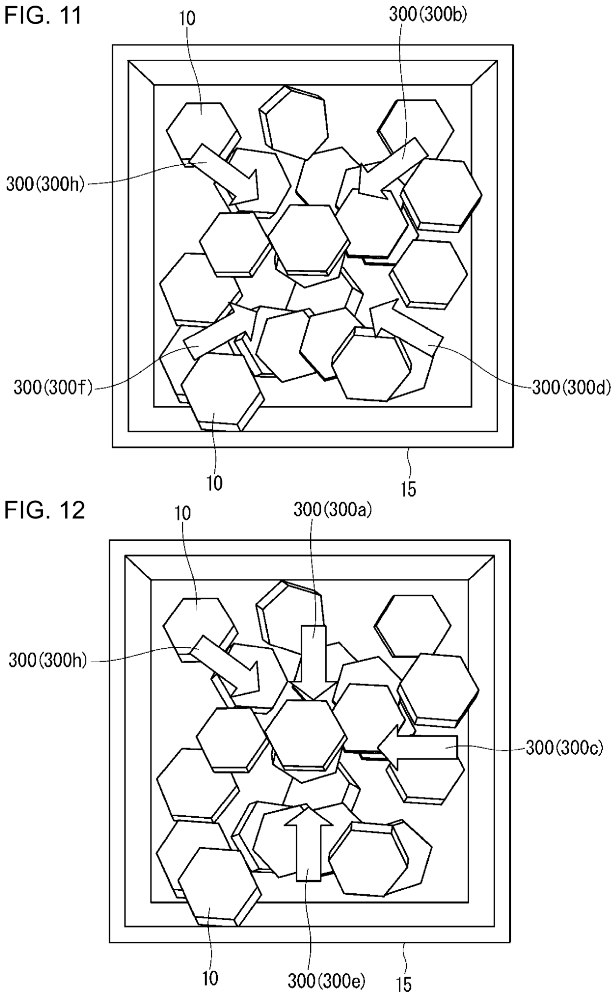

For example, the stirring patterns toward the center are different from each other between a first stirring process and a second stirring process. For example, the multiple directions 300 in the first stirring process are four directions 300a, 300c, 300e, and 300g illustrated in FIG. 10. The multiple directions 300 in the second stirring process are four directions 300b, 300d, 300f, and 300h illustrated in FIG. 11. In this case, the multiple directions 300 in the first stirring process include the directions 300a, 300c, 300e, and 300g that are different from all the multiple directions 300 in the second stirring process. The multiple directions 300 in the second stirring process include the directions 300b, 300d, 300f, and 300h that are different from all the multiple directions 300 in the first stirring process. In this example, the numbers of multiple directions 300 are the same between the first stirring process and the second stirring process, but the multiple directions 300 are defined differently from each other between the first stirring process and the second stirring process. In this example, each of the multiple directions 300 in the first stirring process is different from each of the multiple directions 300 in the second stirring process. In other words, the multiple directions 300 in the first stirring process do not include the multiple directions 300 in the second stirring process. Each of the multiple directions 300 in the second stirring process is different from each of the multiple directions 300 in the first stirring process. In other words, the multiple directions 300 in the second stirring process do not include the multiple directions 300 in the first stirring process.

In another example, the multiple directions 300 in the first stirring process are four directions 300a, 300c, 300e, and 300h illustrated in FIG. 12. The multiple directions 300 in the second stirring process are the four directions 300b, 300d, 300f, and 300h illustrated in FIG. 11. In this case, the multiple directions 300 in the first stirring process include the directions 300a, 300c, and 300e that are different from all the multiple directions 300 in the second stirring process. The multiple directions 300 in the second stirring process include the directions 300b, 300d, and 300f that are different from all the multiple directions 300 in the first stirring process. In this example as well, the numbers of multiple directions 300 are the same between the first stirring process and the second stirring process, but the multiple directions 300 are defined differently from each other between the first stirring process and the second stirring process.

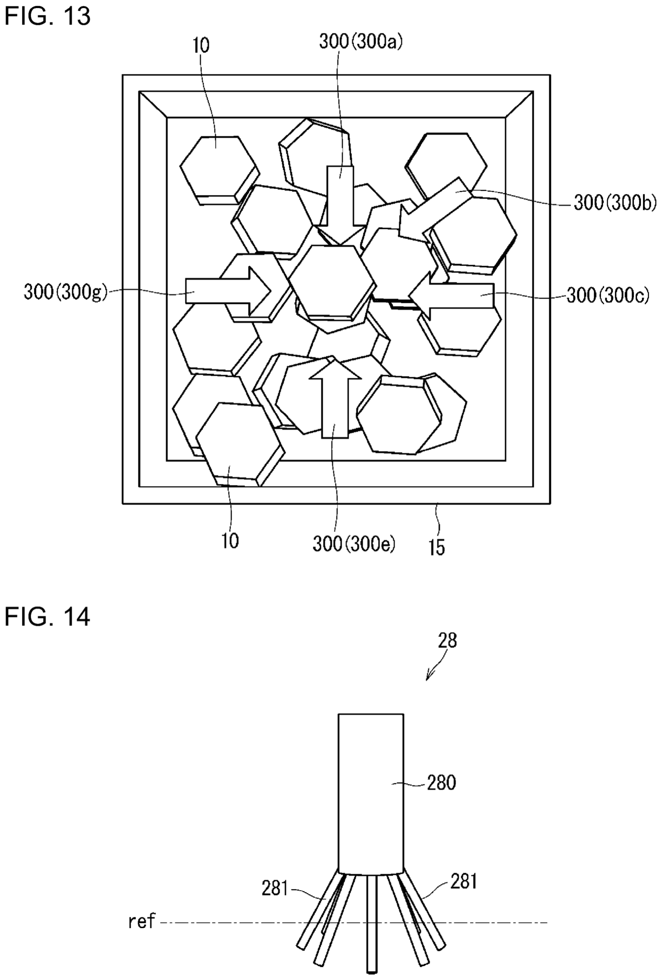

In another example, the multiple directions 300 in the first stirring process are five directions 300a, 300b, 300c, 300e, and 300g illustrated in FIG. 13. The multiple directions 300 in the second stirring process are the four directions 300b, 300d, 300f, and 300h illustrated in FIG. 11. In this case, the multiple directions 300 in the first stirring process include the directions 300a, 300c, 300e, and 300g that are different from all the multiple directions 300 in the second stirring process. The multiple directions 300 in the second stirring process include the directions 300d, 300f, and 300h that are different from all the multiple directions 300 in the first stirring process. In this example, the numbers of multiple directions 300 are different from each other between the first stirring process and the second stirring process.

When the stirring patterns toward the center are different from one another among the first stirring process, the second stirring process, and a third stirring process, for example, the multiple directions 300 in the first stirring process may be the four directions 300a, 300c, 300e, and 300h illustrated in FIG. 12. The multiple directions 300 in the second stirring process may be the five directions 300a, 300b, 300c, 300e, and 300g illustrated in FIG. 13. The multiple directions 300 in the third stirring process may be the four directions 300b, 300d, 300f, and 300h illustrated in FIG. 11.

The controller 60 may control the robot 2 to, for example, repeatedly perform multiple types of stirring processes with different stirring patterns toward the center sequentially. For example, the controller 60 may control the robot 2 to alternately perform the first stirring process and the second stirring process. For example, in the processing illustrated in FIG. 6, one of the first stirring process or the second stirring process may be performed in step s4 performed at odd-numbered times, and the other of the first stirring process or the second stirring process may be performed in step s4 performed at even-numbered times. For example, the stirrer 28 may move in the directions 300a, 300c, 300e, and 300g illustrated in FIG. 10 in step s4 performed at odd-numbered times, and move in the directions 300b, 300d, 300f, and 300h illustrated in FIG. 11 in step s4 performed at even-numbered times. This allows the multiple target objects 10 in the container 15 to be stirred efficiently. More specifically, this allows the multiple target objects 10 in the container 15 to be stirred sufficiently, while reducing the time taken to stir the multiple target objects 10 in the container 15 during the operation of the robot 2. When each of the multiple directions 300 in the first stirring process is different from each of the multiple directions 300 in the second stirring process as in this example, the multiple target objects 10 in the container 15 can be stirred more efficiently.

Note that the multiple types of stirring processes between which the stirring patterns toward the center are different from each other may not be repeatedly performed sequentially. For example, one of the first stirring process or the second stirring process may be continuously performed multiple times, and the other of the first stirring process or the second stirring process may be performed at least once. The first stirring process, the second stirring process, and the third stirring process may be performed in this order, and then the third stirring process, the second stirring process, and the first stirring process may be performed in this order.

### Height of Stirrer

An example method for setting the height of the stirrer 28 from the container 15 in the stirring process will now be described.

FIG. 14 is a schematic diagram of the stirrer 28, describing an example height of the stirrer 28 set in the stirring process. As illustrated in FIG. 14, the controller 60 may control the robot 2 to cause a reference height position ref of the multiple target objects 10 in the container 15 to be between the distal ends of the elongated members 281 and the attachment 280 in the stirring process. The reference height position ref may be a representative height position of the multiple target objects 10 in the container 15. For the multiple elongated members 281 with different lengths, the reference height position ref may be, for example, between the distal end of the shortest elongated member 281 of the multiple elongated members 281 and the attachment 280 or between the distal end of the longest elongated member 281 of the multiple elongated members 281 and the attachment 280 in the stirring process.

The reference height position ref may be set based on, for example, an average height position of the multiple target objects 10 in the container 15. In step s4 described above, the controller 60 determines the average height position of the multiple target objects 10 in the container 15 based on, for example, the second camera images including the multiple target objects 10 in the container 15. When the controller 60 causes the robot 2 to perform the stirring operation toward the center, the controller 60 sets, for example, the determined average height position as the reference height position ref of the multiple target objects 10 in the container 15. When the controller 60 causes the robot 2 to perform the circular stirring operation, the controller 60 sets a position that is higher than the determined average height position by a predetermined amount as the reference height position ref of the multiple target objects 10 in the container 15. The controller 60 controls the robot 2 to cause the set reference height position ref to be between the distal ends of the elongated members 281 and the attachment 280. The controller 60 then causes the robot 2 to cause the stirrer 28 to move and causes the robot 2 to perform the stirring operation toward the center or the circular stirring operation.

To determine the average height position of the multiple target objects 10 in the container 15, the controller 60 identifies an area (also referred to as a target object area) including the multiple target objects 10 in the container 15 based on, for example, the color image included in the second camera images. The controller 60 then determines an average of the distances to the measurement points in the target object area based on the range image included in the second camera images. The controller 60 may use the determined average as the average height position of the multiple target objects 10 in the container 15.

In the stirring process, as described above, the robot 2 is controlled to cause the reference height position ref of the multiple target objects 10 in the container 15 to be between the distal ends of the elongated members 281 and the attachment 280. This reduces the likelihood that the attachment 280 that is relatively hard hits the target objects 10 in the container 15. The target objects 10 are thus less likely to be damaged in the stirring process.

For the robotic system 1 configured to forcibly stop the robot 2 in response to large torque being applied to the joints in the arm 20, the robot 2 may be forcibly stopped when the relatively hard attachment 280 hits any of the target objects 10. In this example, the attachment 280 is less likely to hit the target objects 10. The robot 2 is thus less likely to be forcibly stopped.

In the above example, a single reference height position ref is set for the entire container 15. Thus, when the container 15 includes an area in which some of the target objects 10 are piled high and an area in which some of the target objects 10 are piled low, the hard attachment 280 may hit the target objects 10 in the area in which some of the target objects 10 are piled high.

The controller 60 may thus divide the internal space of the container 15 into multiple subareas 150 and set the reference height position ref individually for each of the subareas 150. In this case, when multiple target objects 10 in each of the subareas 150 are stirred in the stirring process, the controller 60 may control the robot 2 to cause the reference height position ref corresponding to the subarea 150 to be between the distal ends of the elongated members 281 and the attachment 280.

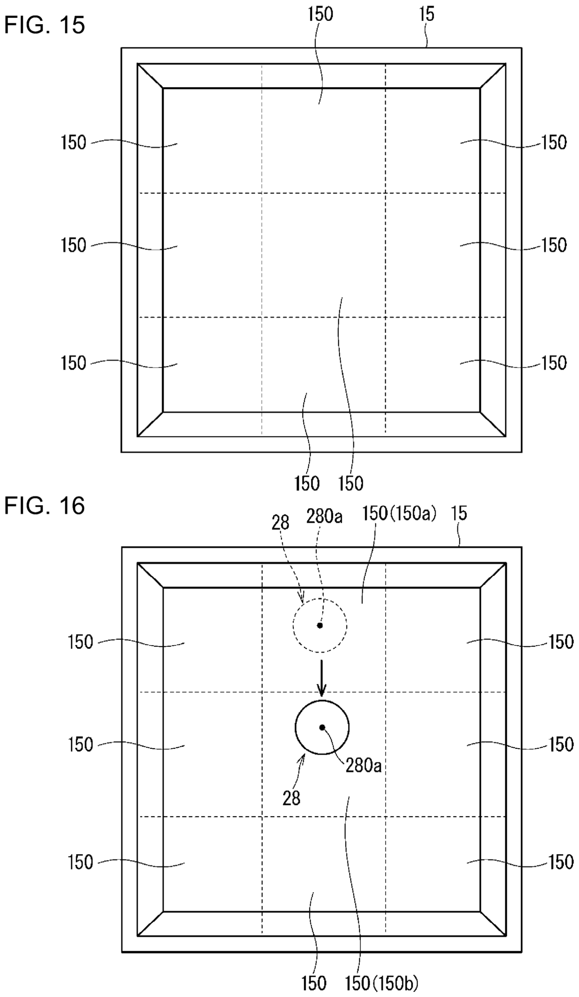

FIG. 15 is a schematic diagram of an example of the container 15 with its internal space divided into the multiple subareas 150. In the example in FIG. 15, the internal space of the container 15 is equally divided into nine subareas 150 in a matrix. One of the multiple subareas 150 in focus (in other words, a subarea 150 to be described) may be hereafter referred to as a target subarea 150.

The controller 60 determines the average height position of the multiple target objects 10 in the target subarea 150 based on the second camera images as in the above example. The controller 60 then sets the reference height position ref of the multiple target objects 10 in the target subarea 150 based on the determined average height position. For example, the controller 60 sets the determined average height position as the reference height position ref of the multiple target objects 10 in the target subarea 150. The controller 60 sets the reference height position ref corresponding to each of the subareas 150 in the same or a similar manner. In this example, the height of the stirrer 28 is set in the same manner irrespective of whether the stirring operation toward the center is performed or the circular stirring operation is performed.

In the stirring process, when, for example, the attachment 280 includes a central axis 280a on the target subarea 150 in the longitudinal direction as viewed from above the container 15, the controller 60 controls the robot 2 to cause the reference height position ref of the multiple target objects 10 in the target subarea 150 to be between the distal ends of the elongated members 281 and the attachment 280.

For example, as illustrated in FIG. 16, the stirrer 28 may move, in the stirring process, from a subarea 150a to a subarea 150b as viewed from above the container 15. In this case, in the stirring process, when the central axis 280a is in the subarea 150a as viewed from above the container 15, the robot 2 is controlled to cause the reference height position ref of the multiple target objects 10 in the subarea 150a to be between the distal ends of the elongated members 281 and the attachment 280. In the stirring process, when the central axis 280a is in the subarea 150b as viewed from above the container 15, the robot 2 is controlled to cause the reference height position ref of the multiple target objects 10 in the subarea 150b to be between the distal ends of the elongated members 281 and the attachment 280. Note that, when the central axis 280a is in multiple subareas 150a as viewed from above the container 15, the robot 2 may be controlled to cause the reference height position ref corresponding to any one of the multiple subareas 150a to be between the distal ends of the elongated members 281 and the attachment 280.

As described above, the reference height position ref is set individually for each of the multiple subareas 150, thus reducing the likelihood that the hard attachment 280 hits the target objects 10 in the stirring process.

The internal space of the container 15 may be divided into the multiple subareas 150 in any manner other than the manner in the above example. For example, the internal space of the container 15 may be divided into fewer than nine subareas 150 or ten or more subareas 150. The internal space of the container 15 may not be divided in a matrix.

### Another Example Timing of Performing Stirring Process

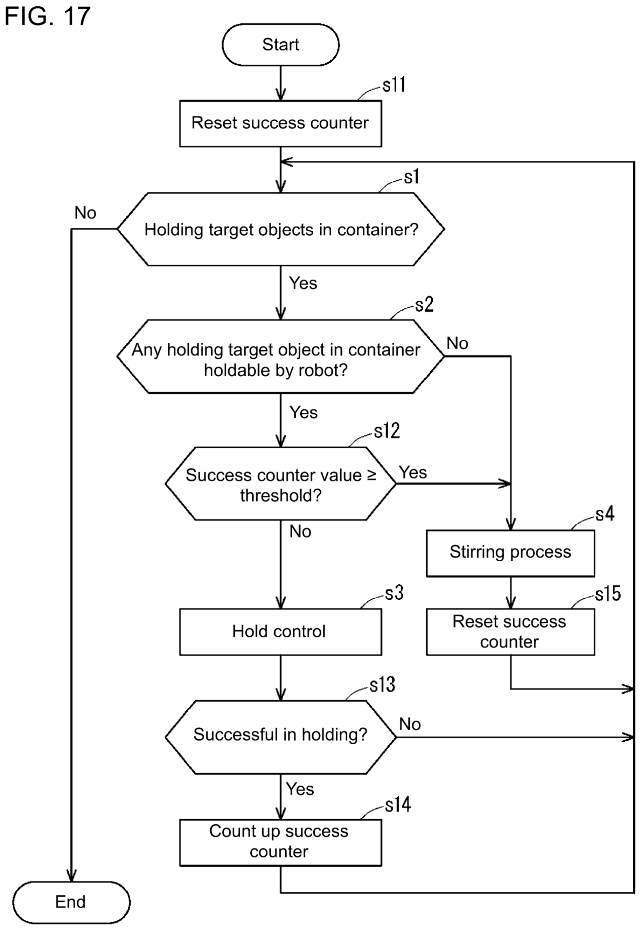

The controller 60 may cause the robot 2 to perform the stirring process based on the number of times (also referred to as the number of times of successful holding) the robot 2 is successful in holding one of the target objects 10 in the container 15. FIG. 17 is a flowchart of an example operation performed by the controller 60 in this case. In the example in FIG. 17, the controller 60 includes a success counter that counts the number of times of successful holding.

Once the operation performed by the robot 2 starts, the controller 60 resets the success counter to set a value of the success counter to zero in step s11. The controller 60 then performs step s1 described above. When the determination result is affirmative in step s1, the controller 60 performs step s2 described above. When the determination result is affirmative in step s2, step s12 is performed. When the determination result is negative in step s2, the stirring process is performed in step s4.

In step s12, the controller 60 determines whether the value of the success counter is greater than or equal to a first threshold. The first threshold is, for example, an integer greater than or equal to 1. When the determination result is affirmative in step s12, step s4 is performed. More specifically, when the number of times of successful holding is greater than or equal to the first threshold, the stirring process is performed. After the stirring process is performed in step s4, the controller 60 resets the success counter to set the value of the success counter to zero in step s15.

When the determination result is negative in step s12, step s3 described above is performed. After step s3, step s13 is performed. In step s13, the controller 60 determines whether the robot 2 is successful in holding the target object 10 in the container 15. When the determination result is affirmative in step s13, the controller 60 counts up the success counter to increment the value of the success counter by one in step s14. Thus, when the robot 2 attempts to hold one of the target objects 10 in the container 15 and is successful in holding the target object 10 in step s3, the value of the success counter is incremented by one. When the robot 2 is successful in holding the target object 10, the controller 60 controls the posture of the arm 20 to cause the target object 10 held by the holder 26 to be transferred from the source container 15 to the destination container 16. After the target object 10 is placed in the destination container 16, the holder 26 is located above the container 15 again. Step s1 is then performed again. The controller 60 thereafter operates in the same manner as or in a similar manner to the above.

When the determination result is negative in step s13, or in other words, when the robot 2 attempts to hold one of the holding target objects 10 in the container 15 and is unsuccessful in holding the target object 10 in step s3, step s1 is performed again. The controller 60 thereafter operates in the same manner as or in a similar manner to the above.

In the example in FIG. 17, the stirring process is performed based on the number of times of successful holding as described above. When the robot 2 is successful in holding one of the target objects 10, the arrangement of the multiple target objects 10 in the container 15 changes. The robot 2 may thus hold each of the target objects 10 in the container 15 less easily. When the stirring process is performed based on the number of times of successful holding as in this example, the robot 2 can easily hold each of the target objects 10 in the container 15.

When, in step s3, the robot 2 is successful in holding one of the target objects 10 once but drops the target object 10 while transferring the target object 10 to the destination container 16, the controller 60 may determine that the robot 2 is unsuccessful in holding the target object 10. In this case, step s1 is performed again without step s14 being performed. The controller 60 can determine that the robot 2 has dropped the target object 10 based on the end effector state information output from the effector sensor 55.

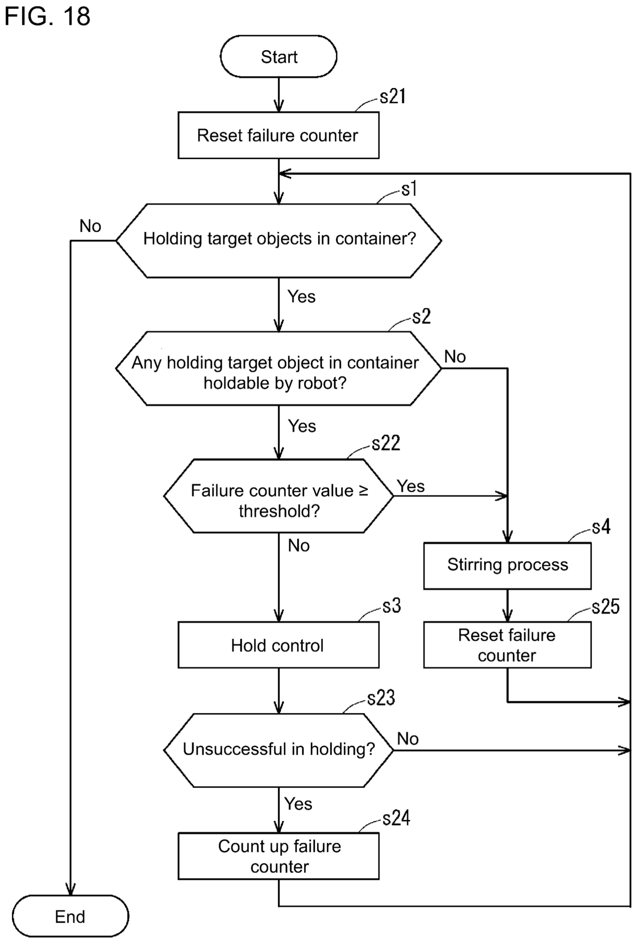

The controller 60 may cause the robot 2 to perform the stirring process based on the number of times (also referred to as the number of times of unsuccessful holding) the robot 2 is unsuccessful in holding one of the target objects 10 in the container 15. FIG. 18 is a flowchart of an example operation performed by the controller 60 in this case. In the example in FIG. 18, the controller 60 includes a failure counter that counts the number of times of unsuccessful holding.

Once the operation performed by the robot 2 starts, the controller 60 resets the failure counter to set a value of the failure counter to zero in step s21. The controller 60 then performs step s1 described above. When the determination result is affirmative in step s1, the controller 60 performs step s2 described above. When the determination result is affirmative in step s2, step s22 is performed. When the determination result is negative in step s2, the stirring process is performed in step s4.

In step s22, the controller 60 determines whether the value of the failure counter is greater than or equal to a second threshold. The second threshold is, for example, an integer greater than or equal to 1. The second threshold may be the same as, greater than, or less than the first threshold. When the determination result is affirmative in step s22, step s4 is performed. More specifically, when the number of times of unsuccessful holding is greater than or equal to the second threshold, the stirring process is performed. After the stirring process is performed in step s4, the controller 60 resets the failure counter to set the value of the failure counter to zero in step s25.

When the determination result is negative in step s22, step s3 is performed. After step s3, step s23 is performed. In step s23, the controller 60 determines whether the robot 2 is unsuccessful in holding one of the target objects 10 in the container 15. When the determination result is affirmative in step s23, the controller 60 counts up the failure counter to increment the value of the failure counter by one in step s24. Thus, when the robot 2 attempts to hold one of the holding target objects 10 in the container 15 and is unsuccessful in holding the target object 10 in step s3, the value of the failure counter is incremented by one. After step s24, step s1 is performed. The controller 60 thereafter operates in the same manner as or in a similar manner to the above.

When the determination result is negative in step s23, or in other words, when the robot 2 attempts to hold one of the holding target objects 10 in the container 15 and is successful in holding the target object 10 in step s3, the robot 2 transfers the target object 10 being held to the destination container 16 and places the target object 10 in the destination container 16. Step s1 is then performed after the holder 26 in the end effector 25 is located above the container 15 again. The controller 60 thereafter operates in the same manner as or in a similar manner to the above.

When the stirring process is performed based on the number of times of unsuccessful holding as described above, the robot 2 can easily hold each of the target objects 10 in the container 15. When, in step s3, the robot 2 is successful in holding one of the target objects 10 once but drops the target object 10 while transferring the target object 10 to the destination container 16, the controller 60 may determine that the robot 2 is unsuccessful in holding the target object 10. In this case, after step s24 is performed, step s1 is performed again.

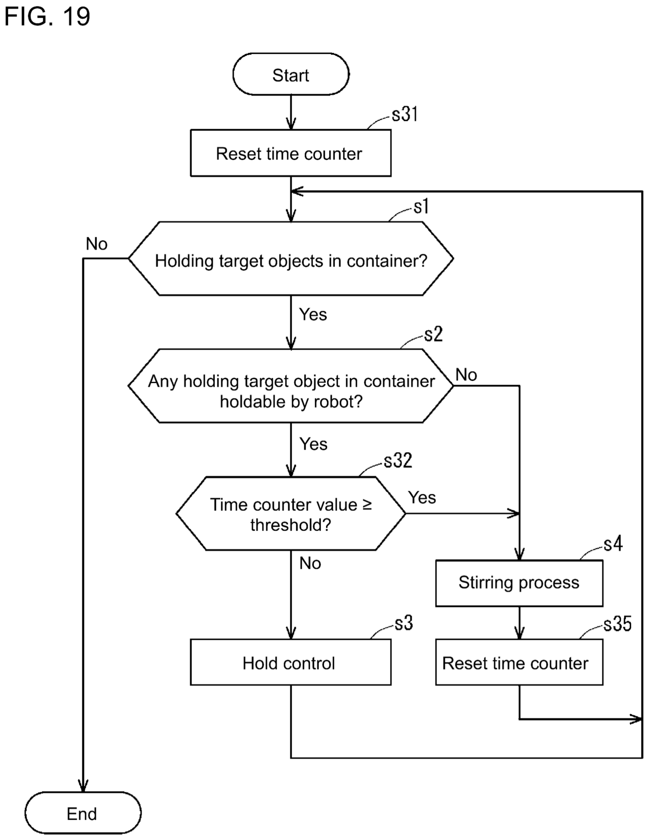

The controller 60 may cause the robot 2 to perform the stirring process based on an elapsed time (also referred to as an elapsed operation time) of the operation performed by the robot 2. FIG. 19 is a flowchart of an example operation performed by the controller 60 in this case. In the example in FIG. 19, the controller 60 includes a time counter that counts time. A value of the time counter is, for example, incremented by one every time a predetermined time elapses. In the example in FIG. 19, the robot 2 repeatedly performs the stirring process periodically during operation.

Once the operation performed by the robot 2 starts, the controller 60 resets the time counter to set a value of the time counter to zero in step s31. The controller 60 then performs step s1 described above. When the determination result is affirmative in step s1, the controller 60 performs step s2 described above. When the determination result is affirmative in step s2, step s32 is performed. When the determination result is negative in step s2, the stirring process is performed in step s4.

In step s32, the controller 60 determines whether the value of the time counter is greater than or equal to a third threshold. The third threshold is, for example, an integer greater than or equal to 1. The third threshold may be the same as, greater than, or less than the first threshold. The third threshold may be the same as, greater than, or less than the second threshold.

When the determination result is affirmative in step s32, step s4 is performed. When the stirring process is performed in step s4, the controller 60 resets the time counter to set the value of the time counter to zero in step s35.

When the determination result is negative in step s32, step s3 is performed. When the robot 2 attempts to hold one of the holding target objects 10 in the container 15 and is unsuccessful in holding the target object 10 in step s3, step s1 is performed again. The controller 60 thereafter operates in the same manner as or in a similar manner to the above. When the robot 2 attempts to hold one of the holding target objects 10 in the container 15 and is successful in holding the target object 10 in step s3, the robot 2 transfers the target object 10 being held to the destination container 16 and places the target object 10 in the destination container 16. Step s1 is then performed after the holder 26 in the end effector 25 is located above the container 15 again. The controller 60 thereafter operates in the same manner as or in a similar manner to the above.

When the stirring process is performed based on the elapsed operation time as described above, the robot 2 can easily hold each of the target objects 10 in the container 15.

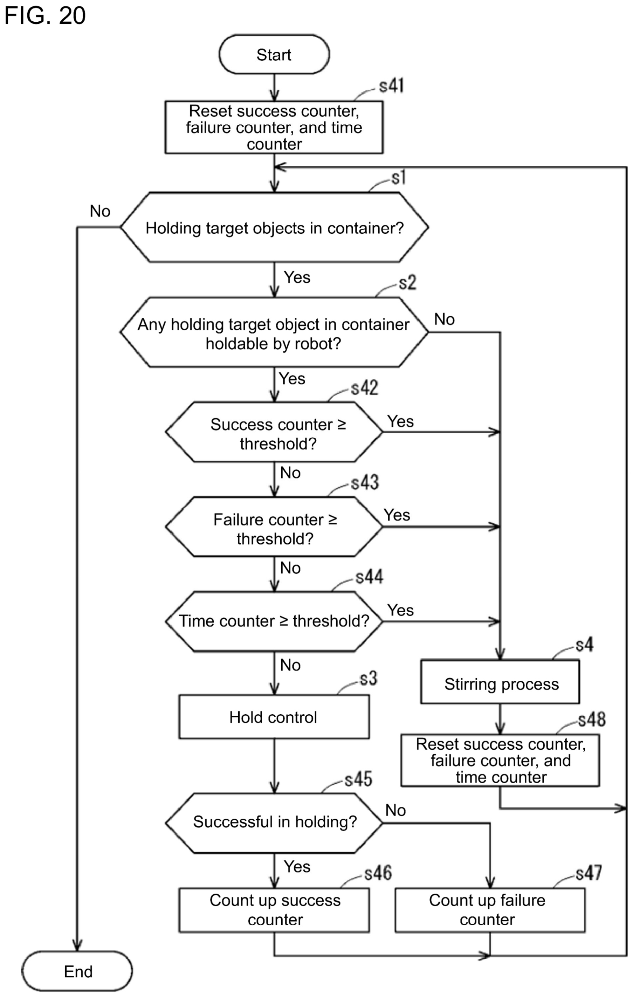

The controller 60 may cause the robot 2 to perform the stirring process based on at least two of the number of times of successful holding, the number of times of unsuccessful holding, or the elapsed operation time. FIG. 20 is an example operation performed by the controller 60 when the controller 60 causes the robot 2 to perform the stirring process based on the number of times of successful holding, the number of times of unsuccessful holding, and the elapsed operation time.

Once the operation performed by the robot 2 starts, the controller 60 resets the success counter, the failure counter, and the time counter to set the values of the success counter, the failure counter, and the time counter to zero in step s41. The controller 60 then performs step s1 described above. When the determination result is affirmative in step s1, the controller 60 performs step s2 described above. When the determination result is affirmative in step s2, step s42 is performed. When the determination result is negative in step s2, the stirring process is performed in step s4.

In step s42, the controller 60 determines whether the value of the success counter is greater than or equal to the first threshold. When the determination result is affirmative in step s42, step s4 is performed. When the stirring process is performed in step s4, the controller 60 resets the success counter, the failure counter, and the time counter to set the values of the counters to zero in step s48. After step s48, step s1 is performed again. The controller 60 thereafter operates in the same manner as or in a similar manner to the above.

When the determination result is negative in step s42, the controller 60 determines whether the value of the failure counter is greater than or equal to the second threshold in step s43. When the determination result is affirmative in step s43, step s4 is performed. Steps s48 and s1 are then performed sequentially. The controller 60 thereafter operates in the same manner as or in a similar manner to the above.

When the determination result is negative in step s43, the controller 60 determines whether the value of the time counter is greater than or equal to the third threshold in step s44. When the determination result is affirmative in step s44, step s4 is performed. Steps s48 and s1 are then performed sequentially. The controller 60 thereafter operates in the same manner as or in a similar manner to the above.

When the determination result is negative in step s44, step s3 is performed. After step s3, step s45 is performed. In step s45, the controller 60 determines whether the robot 2 is successful in holding the target object 10 in the container 15. When the determination result is affirmative in step s45, the controller 60 counts up the success counter to increment the value of the success counter by one in step s46. After step s46, the robot 2 transfers the target object 10 being held to the destination container 16 and places the target object 10 in the destination container 16. Step s1 is then performed after the holder 26 in the end effector 25 is located above the container 15 again. The controller 60 thereafter operates in the same manner as or in a similar manner to the above.

When the determination result is negative in step s45, or in other words, when the robot 2 is determined to be unsuccessful in holding the target object 10 in the container 15, the controller 60 counts up the failure counter to increment the value of the failure counter by one in step s47. After step s47, step s1 is performed again. The controller 60 thereafter operates in the same manner as or in a similar manner to the above.

Although steps s42, s43, and s44 are performed in this order in the above example, steps s42, s43, and s44 may be performed in any other order. For example, steps s43, s44, and s42 may be performed in this order. Steps s44, s42, and s43 may be performed in this order.

When the controller 60 causes the robot 2 to perform the stirring process based on the number of times of successful holding and the number of times of unsuccessful holding, the flowchart illustrated in FIG. 20 may be changed as described below. For example, the success counter and the failure counter are initialized in step s41. When the determination result is negative in step s43, step s3 is performed without step s44 being performed. The success counter and the failure counter are reset in step s48.

When the controller 60 causes the robot 2 to perform the stirring process based on the number of times of successful holding and the elapsed operation time, the flowchart illustrated in FIG. 20 may be changed as described below. For example, the success counter and the time counter are initialized in step s41. When the determination result is negative in step s42, step s44 is performed without step s43 being performed. When the determination result is negative in step s45, step s1 is performed without step s47 being performed. The success counter and the time counter are reset in step s48.

When the controller 60 causes the robot 2 to perform the stirring process based on the number of times of unsuccessful holding and the elapsed operation time, the flowchart illustrated in FIG. 20 may be changed as described below. For example, the failure counter and the time counter are initialized in step s41. When the determination result is affirmative in step s2, step s43 is performed without step s42 being performed. When the determination result is affirmative in step s45, step s1 is performed without step s46 being performed. The failure counter and the time counter are reset in step s48.

Although the stirring process is performed in step s4 in response to the determination result being negative in step s2 in the examples in FIGs. 17 to 20, the operation performed by the robot 2 may end without the stirring process being performed.

The positional relationship between the stirrer 28 and a component including the holder 26 and the attachment 27 is not limited to the above example. For example, a longitudinal direction of the attachment 27 and a longitudinal direction of the attachment 280 in the stirrer 28 may not be parallel to each other unlike in the example in FIGs. 2 and 3. For example, the longitudinal direction of the attachment 27 and the longitudinal direction of the attachment 280 in the stirrer 28 may be perpendicular to each other. As in the example in which the longitudinal direction of the attachment 27 and the longitudinal direction of the attachment 280 are perpendicular to each other, when the holder 26 in the exposed state is to hold each of the target objects 10 and the stirrer 28 in the exposed state does not hit the target objects 10 and when the holder 26 in the exposed state does not hit the target objects 10 while the stirrer 28 in the exposed state stirs the multiple target objects 10 in the container 15, the holder 26 and the stirrer 28 may constantly be in the exposed state without being accommodated in the housing 29.

Although the stirrer 28 is separate from the holder 26 in the above example, the holder 26 may be used as the stirrer 28 that stirs the multiple target objects 10 in the container 15, or the holder 26 and the attachment 27 may be used as the stirrer 28 that stirs the multiple target objects 10 in the container 15.

The robotic system 1 may not include the arm control device 3, and the robot control device 6 may function in the same manner as or in a similar manner to the arm control device 3. In other words, the robot control device 6 and the arm control device 3 together may be a single control device. The robotic system 1 may not include the effector control device 4, and the robot control device 6 may function in the same manner as or in a similar manner to the effector control device 4. In other words, the robot control device 6 and the effector control device 4 together may be a single control device. The robotic system 1 may not include the arm control device 3 and the effector control device 4, and the robot control device 6 may function in the same manner as or in a similar manner to the arm control device 3 and the effector control device 4. In other words, the robot control device 6, the arm control device 3, and the effector control device 4 together may be a single control device.

The robot control device, the robot, and the robotic system including the robot control device and the robot have been described in detail, but the above structures are illustrative in all respects, and the present disclosure is not limited to the above structures. The above embodiments may be combined in any manner unless any contradiction arises. Examples other than those illustrated above may also be included without departing from the scope of the present disclosure.

For example, although the end effector includes the holder 26 and the stirrer 28 in the above embodiments, the holder 26 may function as the stirrer 28. In this case, the stirrer 28 described above may be replaced with the holder 26 as appropriate.

The present disclosure provides the structures described below.

In one embodiment, (1) a robot control device includes a controller. The controller controls a robot configured to perform an operation of sequentially holding each of a plurality of holding target objects in a container and a stirring process of stirring the plurality of holding target objects. The controller controls the robot to stir the plurality of holding target objects in the container from an edge of the container toward a center of the container in the stirring process.

(2) In the robot control device according to (1), the controller controls the robot to stir the plurality of holding target objects in a plurality of directions from the edge toward the center of the container in the stirring process.

(3) In the robot control device according to (2), in the stirring process, the controller controls the robot to stir, after stirring the plurality of holding target objects in the plurality of directions, the plurality of holding target objects gathered in the center of the container to unpile the plurality of holding target objects.

(4) In the robot control device according to (2) or (3), the controller causes the robot to perform the stirring process a plurality of times. The stirring process performed the plurality of times includes a first stirring process of stirring the plurality of target objects in a plurality of first directions from the edge toward the center of the container, and a second stirring process of stirring the plurality of target objects in a plurality of second directions from the edge toward the center of the container. The plurality of first directions is included in a first stirring pattern. The plurality of second directions is included in a second pattern. The first pattern and the second pattern are different from each other.

(5) In the robot control device according to (4), each of the plurality of first directions is different from each of the plurality of second directions.

(6) In the robot control device according to any one of (1) to (5), the robot includes a stirrer including a plurality of elongated members and an attachment to which the plurality of elongated members is attached. The plurality of elongated members extends from the attachment and is softer than the attachment. The controller controls the robot to cause a reference height position of the plurality of holding target objects in the container to be between distal ends of the plurality of elongated members and the attachment included in the stirrer.

(7) In the robot control device according to (6), the controller determines the reference height position based on an average height position of the plurality of holding target objects in the container.

(8) In the robot control device according to (6), the controller divides an internal space of the container into a plurality of subareas. The controller controls, when holding target objects of the plurality of holding target objects in each of the plurality of subareas are stirred in the stirring process, the robot to cause a reference height position of the holding target objects in each of the plurality of subareas to be between the distal ends of the plurality of elongated members and the attachment included in the stirrer.

(9) In the robot control device according to any one of (1) to (8), the controller causes the robot to perform the stirring process based on a number of times the robot is successful in holding a holding target object of the plurality of holding target objects in the container.

(10) In the robot control device according to any one of (1) to (9), the controller causes the robot to perform the stirring process based on a number of times the robot is unsuccessful in holding a holding target object of the plurality of holding target objects in the container.

(11) In the robot control device according to any one of (1) to (10), the controller causes the robot to perform the stirring process based on an elapsed time of the operation of sequentially holding each of the plurality of holding target objects.

(12) In the robot control device according to any one of (1) to (11), the controller causes the robot to perform the stirring process when none of the plurality of holding target objects in the container is holdable by the robot.

(13) A robot is a robot for performing an operation of sequentially holding each of a plurality of holding target objects randomly placed in a container and a stirring process of stirring the plurality of holding target objects in the container. The robot stirs the plurality of holding target objects in the container from an edge of the container toward a center of the container in the stirring process.

(14) A stirring method is a method implementable with a robot that performs an operation of sequentially holding each of a plurality of holding target objects randomly placed in a container and a stirring process of stirring the plurality of holding target objects in the container. The stirring method includes stirring the plurality of holding target objects in the container from an edge of the container toward a center of the container in the stirring process.

(15) A program causes a computer to function as the controller included in the robot control device according to any one of (1) to (12).

### REFERENCE SIGNS

2 robot
6 robot control device
10 holding target object
15 container
28 stirrer
60 controller
150 subarea
280 attachment
281 elongated member
630 program

## Claims

1. A robot control device, comprising:
a controller configured to control a robot, the robot being configured to perform an operation of sequentially holding each of a plurality of holding target objects in a container and a stirring process of stirring the plurality of holding target objects,
wherein the controller is configured to control the robot to stir the plurality of holding target objects in the container from an edge of the container toward a center of the container in the stirring process.

2. The robot control device according to claim 1, wherein
the controller is configured to control the robot to stir the plurality of holding target objects in a plurality of directions from the edge toward the center of the container in the stirring process.

3. The robot control device according to claim 2, wherein
in the stirring process, the controller is configured to control the robot to stir, after stirring the plurality of holding target objects in the plurality of directions, the plurality of holding target objects gathered in the center of the container to unpile the plurality of holding target objects.

4. The robot control device according to claim 2 or claim 3, wherein
the controller is configured to cause the robot to perform the stirring process a plurality of times,
the stirring process performed the plurality of times includes
a first stirring process of stirring the plurality of target objects in a plurality of first directions from the edge toward the center of the container, and
a second stirring process of stirring the plurality of target objects in a plurality of second directions from the edge toward the center of the container, and
the plurality of first directions is included in a first stirring pattern, the plurality of second directions is included in a second pattern, and the first pattern and the second pattern are different from each other.

5. The robot control device according to claim 4, wherein
each of the plurality of first directions is different from each of the plurality of second directions.

6. The robot control device according to any one of claims 1 to 5, wherein
the robot includes a stirrer including a plurality of elongated members and an attachment to which the plurality of elongated members is attached,
the plurality of elongated members extends from the attachment and is softer than the attachment, and
the controller is configured to control the robot to cause a reference height position of the plurality of holding target objects in the container to be between distal ends of the plurality of elongated members and the attachment included in the stirrer.

7. The robot control device according to claim 6, wherein
the controller is configured to determine the reference height position based on an average height position of the plurality of holding target objects in the container.

8. The robot control device according to claim 6, wherein
the controller is configured to divide an internal space of the container into a plurality of subareas, and
the controller is configured to control, when holding target objects of the plurality of holding target objects in each of the plurality of subareas are stirred in the stirring process, the robot to cause a reference height position of the holding target objects in each of the plurality of subareas to be between the distal ends of the plurality of elongated members and the attachment included in the stirrer.

9. The robot control device according to any one of claims 1 to 8, wherein
the controller is configured to cause the robot to perform the stirring process based on a number of times the robot is successful in holding a holding target object of the plurality of holding target objects in the container.

10. The robot control device according to any one of claims 1 to 9, wherein
the controller is configured to cause the robot to perform the stirring process based on a number of times the robot is unsuccessful in holding a holding target object of the plurality of holding target objects in the container.

11. The robot control device according to any one of claims 1 to 10, wherein
the controller is configured to cause the robot to perform the stirring process based on an elapsed time of the operation of sequentially holding each of the plurality of holding target objects.

12. The robot control device according to any one of claims 1 to 11, wherein
the controller is configured to cause the robot to perform the stirring process when none of the plurality of holding target objects in the container is holdable by the robot.

13. A robot configured to perform an operation of sequentially holding each of a plurality of holding target objects randomly placed in a container and a stirring process of stirring the plurality of holding target objects in the container,
the robot being configured to stir the plurality of holding target objects in the container from an edge of the container toward a center of the container in the stirring process.

14. A stirring method implementable with a robot, the robot being configured to perform an operation of sequentially holding each of a plurality of holding target objects randomly placed in a container and a stirring process of stirring the plurality of holding target objects in the container, the method comprising:
stirring the plurality of holding target objects in the container from an edge of the container toward a center of the container in the stirring process.

15. A program for causing a computer to function as:
the controller included in the robot control device according to any one of claims 1 to 12.
